# EUROPEAN PATENT APPLICATION

(11) **EP 2 339 495 A1**
(43) Date of publication of application: **29.06.2011**
(21) Application number: 10405135.4
(22) Date of filing: 12.07.2010
(51) Int. Cl.: G06F 21/00

(54) **Method for a portable memory device and devices that are operable according to said method**

(71) Applicant: Schuetz, Matthias, 4600 Olten (CH)
(72) Inventor: Schuetz, Matthias, 4600 Olten (CH)

(57) **Abstract**

The present invention relates to a method for a portable memory device (100), in particular a memory stick, and it also relates to devices that are operable according to said method. In a first step the portable memory device (100) is connected to a computer system (200) via a data interface (140, 240), through which data (S_{D}) can be exchanged between the portable memory device (100) and the computer system (200). The method comprises the further steps of:
a) with a detection module (30), detecting a system state change that is indicative of a termination of the exchange of data (S_{D}) and thereupon providing an alarm indication (S_{A}), such as a signal or message;
b) forwarding the alarm indication (S_{A}) from the detection module (30) to an alerting module (40); and
c) upon receiving the alarm indication (S_{A}) activating the alerting module (40) at least temporarily in order to send an alerting signal (Sₒᵤₜ) to the user of the portable memory device (100).

## Description

The present invention relates to a method for a portable memory device, in particular a memory stick, also known as a flash drive. The present invention also relates to devices, that are operable according to said method such as portable memory devices, particularly memory sticks, to connecting devices and and to computer systems that are designed to exchange data with said portable memory devices.

Typically, portable memory devices, such as memory sticks, are used as storage media that can be connected to a data interface on the periphery of a fixed or portable computer system in order to exchange data between the portable memory device and the computer system, in particular to download or upload data files. Portable memory devices are frequently used for expanding the memory of the computer system and for transferring data between different computer systems. Memory sticks are of small size and little weight so that they can easily be carried in a small bag or pocket.

As described in US2006023433A1, memory sticks comprise a housing, in which an electronic circuit board is arranged that provides access for exchanging data. The board provides at its front edge a plug connector that can be attached to a USB (Universal Serial Bus) port of the computer system. The plug connector is an integral part of the portable memory device, so that the memory stick forms a small and compact device that is well suited for transportation.

Memory sticks are well known because they are very convenient for transferring data, for example between computers that are placed at different locations. In a typical use, the memory stick is plugged into a computer system at a first location at the beginning of a working session. At the end of the working session, processed data is written back from the computer system to the memory stick in order to carry the processed data to the further computer system at the another location. Consequently, before shutting down the computer system and leaving the first location the user unplugs the memory stick from the computer system for transportation.

However, users frequently terminate a session and shut down the computer system but forget to unplug the memory stick from the USB port. This often happens if the user is under time pressure, e.g. due to a meeting that starts in a minute or a train that must be reached, or if the user's attention is distracted by other activities or duties such as receiving a phone call or checking e-mails.

Leaving the computer system without removing the memory stick may however entail serious consequences. The data that were processed or downloaded during the computer session are not available to the user. Often the newly processed data is important to the user, at least at the time of transferring the data to the memory stick. Therefore the loss of the newest data may entail frustration, inconvenience, further effort or even damages to the user.

The object of the present invention is to provide a method and devices with which the above described problem is avoided.

This problem is solved by a method and devices according to the respective independent claim. Further embodiments of the method and of the devices according to the invention are specified in the dependent claims.

In particular, the invention proposes a method for a portable memory device, in particular a memory stick, which in a first step is connected to a computer system via a data interface, through which data can be exchanged between the portable memory device and the computer system. The method comprises the further steps of:
a) with a detection module, detecting a system state change that is indicative of a termination of the exchange of data and thereupon providing an alarm indication, such as a signal or message;
b) forwarding the alarm indication from the detection module to an alerting module; and
c) upon receiving the alarm indication activating the alerting module at least temporarily in order to send an alerting signal to the user of the portable memory device.

According to this method, the above-described problem of the prior art is avoided to a large extent. In particular the risk of forgetting the portable memory device is greatly reduced, because the user is alerted at a moment when he typically shuts down the computer system, namely at a moment when he is about to leave his working location.

The invention offers the great advantage, that the user's attention is drawn to the portable memory device in a direct, simple and self-explanatory way. Therefore, even in a situation, in which the user is heavily distracted from the portable memory device, the concept of alerting the user according to the invention is likely to provide an immediate reminder of the portable memory device.

In addition, the method according to the invention surprisingly proves to be highly effective because it is very unlikely that the alerting signal is suppressed, overlooked or disregarded during the shutting-down of the computer system, even when the user is in a hurry.

Further, modern types of portable memory device are available at low cost that have a capacity of several gigabytes allowing to store the complete database of a small or medium-sized office. Leaving the computer system without removing the portable memory device may entail the consequence, that the complete data stored on the portable memory device is still accessible to a third party on the computer system, who can exploit these data to the disadvantage of the user. With the method and device according to the invention, this problem can be avoided in a simple and efficient way.

The term computer system is used for a wide range of data processing devices, for example personal computers, such as desktop or notebook computers, printers or displaying devices such as projectors. All these devices have in common that they are suitable for processing data, that they are connectable to a portable memory device for exchanging data and that these connections are typically kept active long enough that there is a risk that the user forgets about the portable memory device.

Usually, after the connection of the portable memory device to the computer system and before the beginning of the exchange of data a start-up process is carried out first. This start-up process may comprise the steps of detecting the presence of the portable memory device, providing a power supply for the portable memory device, exchanging start-up protocol information and entering a waiting state, in which the system is ready to exchange data.

For exchanging data the system leaves the waiting state and enters a read/writing state to transmit data from the computer system to the portable memory device or vice versa. At the end of the data exchange, the system typically returns to the waiting state.

The termination of the exchange of data is typically carried out by a termination process, which is either initiated by the user by issuing a control command to the computer system or by the computer system itself. For example, if the user shuts down the computer system at the end of a working session, during the process of shutting-down the computer system initiates and completes the termination process as an intermediate step of the shutting-down process.

After the termination of the exchange of data the system is disabled from exchanging further data. If further data should be exchanged at a later phase, for example when the user has changed his mind and wants to continue exchanging data, a new start-up process needs to be carried out.

The termination of the exchange of data includes all states in which the exchange of data is terminated and the portable memory device can be safely removed from the computer system, for example a suspended state or a sleeping state, if a removal of the portable memory device in that system state complies with the corresponding interface specification.

In a further embodiment of the invention the system state change is detected by observing an entrance of the system into at least one of:
a) a completion state, in which the exchange of data is completed;
b) a connection closed state, in which the exchange of connection control information is completed;
c) a power-off state, in which the power supply for the portable memory device is switched-off.

The termination of the exchange of data is typically accomplished by a termination process that comprises similar steps as the activation process but in a reversed order. In particular, the termination process may comprise the steps of first exchanging closing control information, exchanging remaining intermediately stored data to complete the data exchange, exchanging device control information such as release commands, exchanging further closing control information, in particular exchanging connection control information to complete the exchange of connection control information, and finally switching off the power supply for the portable memory device.

By completing an increased number of the above mentioned process steps the user can reduce the risk that problems occur as a result of prematurely removing the portable memory device from the computer system. Particularly, by completing the exchange of data a loss of data can be avoided, by completing the exchange of connection control information malicious or undefined operational conditions can be avoided, and by completing the switch-off of the power supply uncontrolled or damaging power supply disruptions can be prevented.

Generally, for a safe removal of the portable memory device it is advantageous to await the entrance of the system into the power-off state. However, different computer systems or different levels of suspension may implement the termination process differently and some computer systems may not enter the power-off state at the termination of the exchange of data. Observing the entrance into an earlier state or observing an other indication such as a connection control information may lead to a more versatile solution.

Thereby, a safe removal of the portable memory device means that the portable memory device means is removed from the computer system at a moment and in a way that the removal complies with the applicable specifications.

In a further embodiment of the invention, the system state change is detected by observing at least one of:
a) a state change, in particular a switching-off, of a power supply for the portable memory device;
b) a state change of the portable memory device, in particular of a memory controller thereof;
c) a state change of the computer system, in particular of a control unit thereof;
d) a termination of a system program;
e) a termination of an application program.

These changes or terminations are directly related to the exchanging of the data and therefore these changes or terminations reliably indicate the termination of the exchange of the data.

Further, by observing these changes or terminations an economical and efficient detection of the termination of the exchange of data is achieved, because an active participation on the process for this termination is not needed. This is particularly advantageous for a portable memory device, because these devices usually have only limited resources of available processing power.

Typically, the portable memory device comprises a memory unit which actually stores the data and which is configured as a non-volatile flash memory, such that the memory unit can store data after a switching-off of its power supply. Therefore by observing the state change of the power supply for the portable memory device, a termination of the exchange of data can reliably be detected.

A termination of the system program usually occurs when the operating program of the computer system is shut down at the end of the working session. For example, the switching-off of a projector corresponds to an end of a system program that controls the operation of the projector and in particular the entrance into an idle state, in which the projector cools down.

A termination of a system program or an application program can also occur at the end of a printing session, when the printer enters an idle state after having completed the printing job. In this case, the printer may terminate the connection to the portable memory device, in particular by shutting-down the power supply or sending a message.

In a further embodiment of the invention, the system state change is detected by receiving and evaluating a state indication information such as a power supply information, a signal or a message, that corresponds to the system state. Accordingly, the system state information is transferred by means of a transmission process, which enables a flexible observation of the system independently from the location of the detection module, for example, in the case that the observed system is remotely connected to the detection module.

In one further embodiment of the invention, the state indication information is received via the data interface, a wire connection, a pluggable connector, a USB interface or any combination thereof. These types of interfaces, in particular the widely used USB interfaces, provide simple, cost-effective and typically standardized connections which in turn, enable a convenient, economical and versatile interconnection between a great number of devices.

All of these interfaces provide convenient, low-cost and reliable connections, which is particularly advantageous if the portable memory device is frequently transferred to different locations.

Other types of interfaces may be used as well. For example with a wireless data connection, such as a wireless USB-connection (CWUSB, Certified Wireless USB), the user may disconnect the data connection by simply carrying away the portable memory device. According to the method of the invention, the user is reminded as well when he shuts down the computer.

In one further embodiment the system state change is detected by comparing the received state indication information to a reference, in particular by comparing the voltage of the received state indication information to a threshold voltage. In this way the evaluation of the state indication information is efficiently focused on the detection of occurrences.

In particular, the comparing of the voltages can be implemented at low cost with standard building blocks, for example by a transistor circuit, an analog inverter or an analog comparator. These standard building blocks make it possible to build small and compact devices, which are well suited for integration in a great number of devices, in particular portable memory devices or connecting devices.

In a further embodiment of the invention, the output signal is emitted as acoustical signal, in particular by generating sounds, tunes or beeps. Usually an acoustic signal draws the attention of the user to the portable memory device even if this device is not directly visible to the user, for example if the portable memory device is plugged into a port which is located at the back of the computer system or when the computer system is placed below the working desk. The portable memory device may also be at the backside of a notebook computer hidden behind the lid of the notebook. Often sounds, tunes or beeps are distinct from other noise and therefore give a good distinction from other sources of sound such as the regular background noise of an office.

The sound may be generated by a sound transducer for example a piezoelectric, electromagnetic or mechanical transducer or a buzzer. These devices are available at small size, with low driving voltage and low power consumption. Therefore the integration of these transducers in the portable memory device requires only a small space within its housing.

In a further embodiment of the invention, the sound is generated by a loudspeaker and the signal for driving the loudspeaker is generated by an electronic circuit or by the controller of the portable memory device. In this way, a more complex-structured audible output such as tunes or beeps or even a spoken voice messages such as "mind the memory stick" can be implemented.

In a further embodiment of the invention, the further steps of the method comprise, at least temporarily, the providing of an autonomous power supply for the alerting module, and if applicable, for the detection module.

With the autonomous power storage unit, it is possible to detect the system state and/or to alert the user even after the switch-off of the power supply for the portable memory device. This enables a flexible and reliable solution independent from the computer system and favorably provides for a versatile use on virtually any computer system at any location.

In a further embodiment of the invention, the autonomous power supply is provided by supplying the power at a level sufficient to alert the user at least during a predetermined period of time, in particular a period of time with a length between one tenth of a second and ten seconds. This makes it possible to implement a simple and economical power storage unit, such that the portable memory device can be built with small size and little weight.

In a further embodiment of the invention, the system, in particular the portable memory device, the data interface or the computer system, is monitored for detecting a removal of the portable memory device from the computer system, and the step of activating the alerting module is performed only if no removal of the portable memory device from the computer system has been detected. After the user has disconnected the portable memory device from the computer system there is usually no need to remind the user of the portable memory device. Therefore the number of false alarms or false alerts can be reduced to a large extent.

The detection of the removal of the portable memory device is particularly useful if the invention is used in connection with a docking device that is connected to a computer system which provides a constant power supply for its peripheral USB-plug connector. In such a case, false alarms, which may occur even without an attached portable memory device, can be avoided.

In a further embodiment of the invention, the system is monitored during a predetermined time period, in particular during a time between one second and ten seconds, more advantageously between two and five seconds, after the detection of the system state change, and the step of activating the alerting module is delayed until this predetermined time period has expired. This delay gives the user of the portable memory device an adequate time period for removing the portable memory device from the computer system on his own initiative and thus the user is less annoyed about early alertings from the alerting module.

However, as described at the previous embodiment, in the case that a removal of the portable memory device has been detected during the predetermined time period, the step of activating the alerting module is not performed. Again this serves to avoid false alarms.

The time period between one and ten seconds, in particular between three and five seconds, is usually an adequate period that is long enough for a comfortable removal of the portable memory device und short enough to avoid that the user has already left his working location, in which case a reminder would be too late.

The detecting module or the alarming module may have means such as a switch or a button for canceling an upcoming alerting signal, such that the user himself can prevent false alarms.

In a further embodiment of the invention the system is monitored by means of a capacitance sensor or a resistance sensor or a voltage sensor or by means of an acceleration sensor that is provided in the portable memory device. Often the means for implementing such a sensor is already present in the system or can be implemented with little effort or low cost.

For example, in a so called hot pluggable data interface the presence of a device is constantly monitored and therefore the removal of a device from the interface is automatically detected. In particular in a USB-interface, according to USB Specification Revision 2.0, Engineering Change Note, Device Capacitance, a device such as a memory stick should present a capacitance of at least 1 µF to the power supply line. If the capacity sensor monitors this capacitance a sudden change of this capacitance is a good indication that the portable memory device has been removed from the computer system. Since the USB-interface has contacting pins, which have different points of contact for data exchange and power supply, a disconnection of the memory stick may be detected before the memory stick enters a power-off state.

Other methods for detecting a removal of the portable memory device can be implemented by monitoring a difference of voltages, a capacitance, or a resistance between different parts of the portable memory device, for example between the top und the bottom part of the housing of the memory stick. A user, who grips the memory stick with his fingers, would change the above mentioned physical properties, such that these changes indicate a removal or at least a removal attempt of the memory stick from the computer system.

Further, modern acceleration sensors can detect the typically abrupt accelerations or relative movements of the portable memory device when it is removed from the computer system.

The invention further proposes a portable memory device, in particular a memory stick, comprising a data interface that is connectable to a computer system for exchanging data between the portable memory device and the computer system, wherein the portable memory device comprises a detection module, which is configured to detect a system state change that is indicative of a termination of the exchange of data and to provide thereupon an alarm indication, such as a signal or message. The portable memory device further comprises an alerting module, which is connected to the detection module for receiving the alarm indication, and which is configured to be activated at least temporarily upon receiving the alarm indication in order to send an alerting signal to the user of the portable memory device.

In one further embodiment the portable memory device comprises a power storage unit, in particular a capacitor or a rechargeable battery, which is connected to the alerting module and, if applicable, to the detection module, to provide at least temporarily an autonomous power supply.

Furthermore, the invention proposes a connecting device for a portable memory device, in particular a docking device, a hub or a repeater, that comprises a data interface to which a computer system and the portable memory device are connectable for exchanging data via the connecting device between the portable memory device and the computer system, wherein the connecting device comprises a detection module, which is configured to detect a system state change that is indicative of a termination of the exchange of data and to provide thereupon an alarm indication, such as a signal or message. The connecting device further comprises an alerting module, which is connected to the detection module for receiving the alarm indication and which is configured to be activated at least temporarily upon receiving the alarm indication in order to send an alerting signal to the user of the portable memory device.

The connecting device can be any kind of device that can be placed as an intermediate device between the portable memory device and the computer system, for example a docking device, a docking station for mobile computers, a hub, a repeater such as a wireless terminal, a computer screen with an integrated connecting port, a line extension, which may provide a convenient desktop connection port for the portable memory device or a memory stick extension.

With the connecting device, the invention can be practiced with a regular portable memory device and a regular computer system. Therefore the connecting device provides a flexible, cost-effective installation, which only requires a minimum of installation effort.

The memory stick extension may comprise a plug at a first side and a socket at a further side, particularly opposite to the first side, such that the memory stick extension can be attached to a regular memory stick and stay permanently attached without significantly increasing the size or weight of the memory stick and therefore without impairing the transportability of the memory stick.

The invention further proposes a computer device for a portable memory device, which comprises a data interface to which the portable memory device is connectable for exchanging data via the connecting device between the portable memory device and the computer system, wherein the computer device comprises a detection module, which is configured to detect a system state change that is indicative of a termination of the exchange of data and to provide thereupon an alarm indication, such as a signal or message. The computer device further comprises an alerting module, which is connected to the detection module for receiving the alarm indication and which is configured to be activated at least temporarily upon receiving the alarm indication in order to send an alerting signal to the user of the portable memory device.

In particular the computer device may be a personal computer, a printer or a displaying device such as a projector, to with the portable memory device, in particular a memory stick, is connectable, for example via a USB-interface. By using this computer device the invention can be practiced with a regular portable memory device, which is especially useful for computer devices such as printers or projectors, which are used by frequently changing guest users that do not have a portable memory device with a reminder function according to the invention.

The invention is described in more detail hereafter by way of exemplary embodiments and with reference to the attached drawings. All reference numerals are identical from one drawing to the next and are described at their first appearance. It is shown in:
- Fig. 1: a first exemplary configuration of an embodiment according to the invention with a computer 200 and a memory stick 100 that comprises a processing unit 10 connected to a control unit 210 of computer 200;
- Fig. 2: a further embodiment according to Fig. 1, but with the processing unit 10 connected to a control unit 110 of memory stick 100;
- Fig. 3: a further embodiment according to Fig. 1, but with the processing unit 10 being integrated in a docking device 300;
- Fig. 4: a further embodiment according to Fig. 1, but with the processing unit 10 being integrated in the computer system 200;
- Fig. 5: a basic flow chart of an embodiment of a method according to the invention;
- Fig. 6: a further embodiment according to Fig. 5 with two additional process steps;

- Fig. 7: a simplified electronic circuit scheme of an embodiment of the processing unit 10 according to Fig. 3; and
- Fig. 8: a simplified signal diagram for the electronic circuit according to Fig. 7.

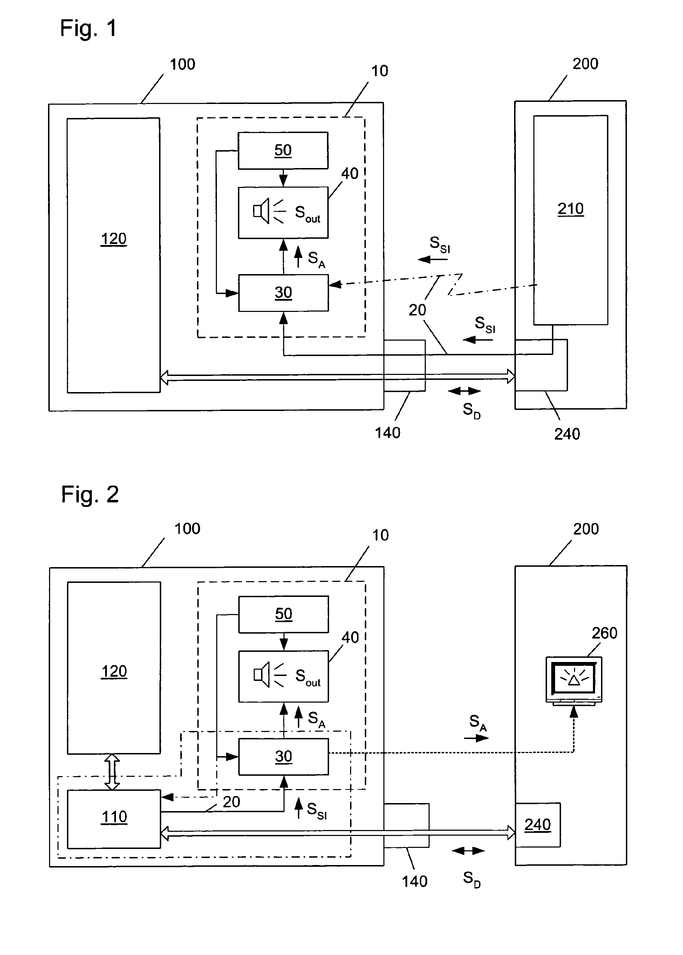

Fig. 1 shows a first exemplary configuration of an embodiment according to the invention with a memory stick 100 as a portable memory device and a computer 200 as a computer system. The memory stick 100 comprises a memory unit 120, which actually stores the digital data and which for example is configured as a non-volatile flash memory. Computer 200, for example a personal desktop computer, comprises a control unit 210. Computer 200 and memory stick 100 are connected via a data interface, through which data S_{D} can be exchanged bidirectionally between computer 200 and memory unit 120. The USB-interface comprises a plug connector 140 at the memory stick 100, which interconnects to a corresponding plug connector 240 located at the periphery of computer 200.

The memory stick 100 comprises a detection module 30, an alerting module 40 and a power storage unit 50. The detection module 30 is connected via a connection 20 to control unit 210 to receive as a state indication information from control unit 210 a state indication signal S_{SI}. The connection 20 is configured as a wire connection via connecting port 140 and connecting port 240 of the data interface. An alerting module 40 is connected to detection module 30 to receive from detection module 30 an alarm indication signal S_{A}. The power storage unit 50 is connected to detection module 30 as well as to alerting module 40 for providing a power supply for detection module 30 and for alerting module 40. As indicated by the dashed line, detection module 30, alerting module 40 and power storage unit 50 may be combined into a processing unit 10, for example configured as an electronic circuit board.

In a first step, a user of memory stick 100 connects the memory stick 100, in particular the memory unit 120 of memory stick 100, to the computer 200 via the plug connectors 140 and 240 to exchange data S_{D}, for example to read data from memory stick 100 or write data to memory stick 100. The memory unit 120 is controlled by control unit 210 and therefore control unit 210 is in an activation state during the exchange of data S_{D.}

Later, at the end of the working session, the exchange of data S_{D} is terminated by carrying out a termination process. This termination process comprises the step of changing, under control of control unit 210, the state of the memory unit 120 from an activated state into a deactivated state and, as a final step, the switching-off of the power supply for memory stick 100. Therefore at the end of the termination process memory unit 120 and control unit 210 are in a power-off state in which the exchange of data S_{D} is disabled and the memory stick 100 can be safely removed from the computer 200 without risking a loss of data or an uncontrolled power disruption.

The state of control unit 210 is transmitted as state indication signal S_{SI} from control unit 210 via connection 20 to detection module 30. In this embodiment, the state indication signal S_{SI} corresponds to the a state of the power supply that is provided for Memory Stick 200. Thus, the state indication signal S_{SI} is indicative of the termination of the exchange of data S_{D}.

Detection module 30 detects a state change by observing control unit 210, in particular by evaluating the received state indication signal S_{SI}. In this embodiment the voltage of the state indication signal S_{SI} is evaluated by comparing this voltage to a threshold voltage as a reference.

The exchange of data is terminated by a switching-off of the power supply to the memory stick 100. The occurrence of this state change is detected at the moment when the voltage of the state indication signal S_{SI} or in this case the voltage of the power supply drops below the threshold voltage. Following the detection of this occurrence, the detection module 30 provides as an alarm indication an alarm indication signal S_{A}. The alarm indication signal S_{A} is forwarded from detection module 30 to alerting module 40.

Upon receiving the alarm indication signal S_{A}, alerting module 40 is activated at least temporarily in order to send as an alerting signal an acoustical signal Sₒᵤₜ such as a sound or a number of beeps to the user of memory stick 100. In this way the attention of the user is drawn to memory stick 100 when he shuts down the computer 200, namely at a moment when he is about to leave the working location.

The power storage unit 50 provides a power supply for the detection module 30 and for the alerting module 40. Therefore, even after a switch-off of the power supply for memory stick 100, the step of detecting the state change of control unit 210 and the step of activating the alerting module 40 can be performed autonomously, at least during a predetermined period of time, in particular between one tenth of a second and five seconds after detecting the entrance of the power-off state.

Connection 20 can also be a dedicated connection, completely separated from the data connection. Further, interface 30 can be based on a wired connection or a wireless connection. Similarly, connection 20 is typically a wired connection, but it can also be a wireless connection, as indicated by the dash-dotted line.

Fig. 2 shows a further embodiment of the invention according to Fig. 1, but with the detection module 30 now being connected via a connection 20 to a control unit 110 that is part of the memory stick 100, instead of being connected to a control unit that is part of the computer 200. Consequently detection module 30 receives the state indication signal S_{SI} from control unit 110 within the memory stick 100 and a further connection from detection module 30 to computer 200 is not needed. Further, the control unit 110 is directly connected to memory unit 120 and may operate as a memory controller for memory unit 120.

As described in the previous embodiment, at the end of the termination process the control unit 110 enters into the power-off state, in which the power supply for memory stick 100 is switched off. In a similar way the state of control unit 110 is transmitted to detection module 30 by transmitting the state indication signal S_{SI} from control unit 110 via state connection 20 to detection module 30. Further, the evaluating of the state indication signal S_{SI,} the activating of the alerting module 40 and the providing of the power supply are similar to the embodiment of Fig. 1.

As indicated by the dash-dotted line, the detection module 30 can be combined with control unit 110. In this case control unit 110 directly provides the alarm indication signal S_{A} on an output port of the control unit 110, from where the alarm indication signal S_{A} is forwarded to alerting module 40.

In addition, the power storage unit 50 may also provide a power supply for control unit 110 in order to perform the steps of detecting the state change of control unit 110. In a simple embodiment, control unit 110 directly forwards as an alarm indication a signal that corresponds to a switching-off of the power supply for memory stick 100. Upon receiving this alarm indication and similar to an inverted action, alerting module 40 becomes activated and alerts the user.

As indicated by the dotted line, alarm indication S_{A} can also be transmitted to a computer display 260 that is part of computer system 200. Thereby, alarm indication S_{A} could be transmitted via a dedicated connection or via the data connection.

The further reference numerals of Fig. 2 are described in the description of Fig. 1.

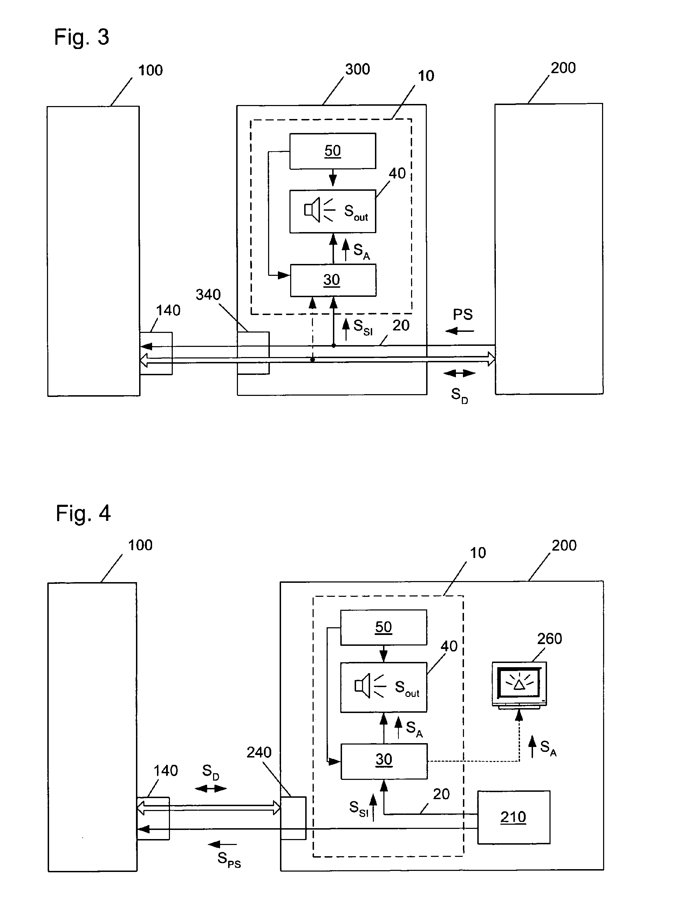

Fig. 3 shows a further embodiment according to Fig. 1, but with processing unit 10 being integrated in a connecting device such as a docking device 300. Docking device 300 comprises a plug connector 340 that is connected to plug connector 140 of memory stick 100. Plug connector 340 is connected to computer 200 for exchanging data between memory stick 100 and computer 200. Further, computer 200 is connected via connection 20 to memory stick 100 as well as processing unit 10 for providing a power supply PS to memory stick 100 and to processing unit 10. Thereby detection module 30 is directly connected to connection 20, such that a state indication signal S_{SI} is identical to power supply PS.

Further, as indicated by the dash-dotted line, detection module 30 can also be directly connected to the data connection. In this case state indication information S_{SI} corresponds to a message, in particular a release command that is transmitted via the data connection to memory stick 100.

The further reference numerals of Fig. 3 are described in the description of Fig. 1.

Fig. 4 shows a further embodiment according to Fig. 1, but with processing unit 10 being integrated in computer system 200. Therefore detection module 30 receives the state indication signal S_{SI} via connection 20 from control unit 210.

Similar to Fig. 2 and as indicated by the dotted line, alarm indication S_{A} can also be transmitted to display 260 on computer 200 for alerting the user of memory stick 100.

The further reference numerals of Fig. 4 are described in the description of Fig. 1.

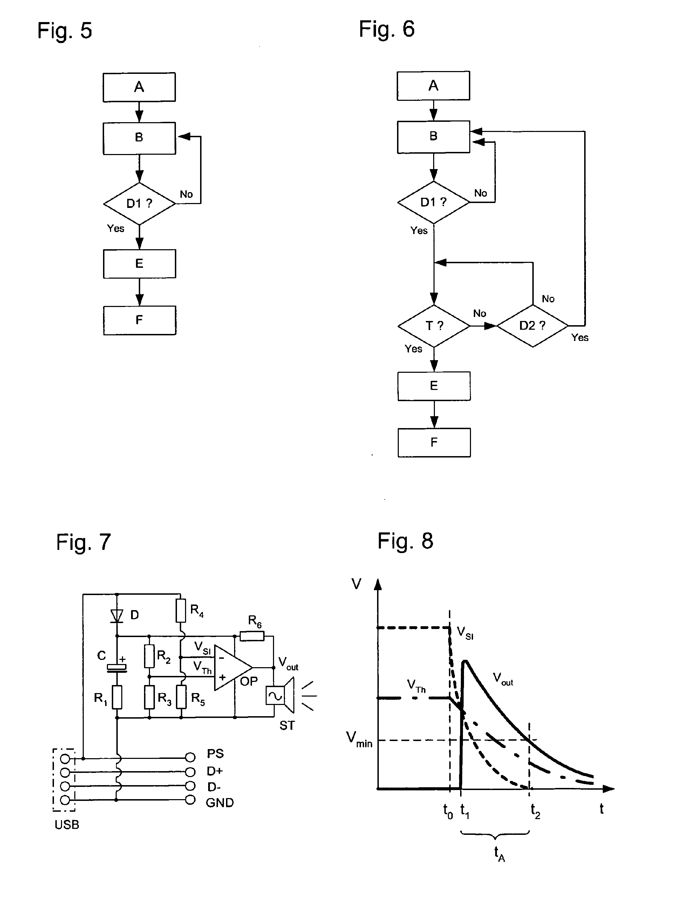

Fig. 5 shows a basic flow chart of an embodiment of a method according to the invention for a memory stick, wherein the method comprises an initial process step A, a receiving process step B, a first detection step D1, a signal forwarding step E and an alerting step F. The blocks shown in the flow chart correspond to the process steps, which are carried out as follows:
A: connecting the portable memory device to a computer system for exchanging data between the portable memory device and the computer system;
B: receiving a state indication information, that indicates the current state of the system;
D1: checking, if the system has entered a state that is indicative of a termination of the exchange of data.
   - If yes, go to the next process step E,
   - If no, go to the previous process step B to receive a further state indication information;
E: providing and forwarding an alarm indication;
F: sending an alerting signal Sₒᵤₜ to the user of the portable memory device.

According to this flow chart, step D1 remains in a loop until the termination of the exchange of data has been detected. As shown below in Fig. 7, these process steps can be implemented as an electronic circuit. These process steps can also be implemented as software modules on a data processor.

Fig. 6 shows a further embodiment according to Fig. 5 with two additional process steps, a timing checking process step T and a second detection process step D2. These additional process steps are carried out as follows:
T: checking, if the lapsed time since the occurrence of the state change according to process step D1 exceeds a predetermined period of time, particularly a waiting time.
   - If yes, go to process step E (as defined in the description of Fig. 5) to provide and forward an alarm indication,
   - If no, go to the next process step D2.
D2: checking, if the portable memory device is disconnected from the computer system.
   - If yes, go to process step B (as defined in the description of Fig. 5) to receive a further state indication information
   - If no, go to the previous process step T to check the lapsed time.

With the additional two process steps, false alarms are avoided. Process step T implements a delay function, to give the user an adequate time period for removing the portable memory device without being alerted, for example a time period between one and ten seconds. Process step D2 implements a disconnection check, which immediately stops the alerting of the user if the disconnection of the portable memory device from the computer system has occurred before the expiry of the waiting time period.

According to these process steps no alerting of the user occurs if the user performs the removal of the memory stick in a regular way and the alerting occurs only, if the user forgets to remove the memory stick.

Again, this flow chart can be implemented as an electronic circuit as well as by software modules on a data processor.

Fig. 7 shows a simplified electronic circuit scheme of an embodiment of the processing unit 10 according to Fig. 3.

The electronic circuit is connected to a plug connector of a USB-interface (Universal Serial Bus). In particular, the electronic circuit is connected firstly to a power supply connection PS and secondly to a ground connection GND, whereas data connections D+ and D- are left untapped. According to USB-specification, revision 2.0, chapter 7.3.2, the voltage V_{BUS} of power supply connection PS should be in the range of +5.25 V to +4.40 V and the voltage of ground connection GND should be in the range of 0 V to +0.025 V.

A capacitor C that serves as power storage unit 50 (referring to Fig. 3) is connected with its positive side via a Diode D to power supply connection PS and via resistor R₁ to ground connection GND. A comparator OP, which serves as detection module 30 (referring to Fig. 3), is connected between the positive side of capacitor C and the ground connection GND for providing a power supply for comparator OP. The non-inverting input of comparator OP is connected to a first voltage divider, which is on one hand connected via resistor R₂ to the positive side of capacitor C and on the other hand via resistor R₃ to ground connection GND. The inverting input of comparator OP is connected to a second voltage divider, which is on one hand connected via resistor R₄ to power supply connection PS and on the other hand via resistor R₅ to ground connection GND. The output of comparator OP is connected on one hand via resistor R₆ to the positive side of capacitor C and on the other hand via a sound transducer ST to ground connection GND.

During normal operation, namely during the exchanging of data or during a waiting state, in which the system is ready for exchanging data, capacitor C is charged by a power supply via Diode D being operated in forward direction. The power supply is provided via a power supply connection PS from a computer (not shown). In addition, the power supply servers as state indication signal S_{SI} (referring to Fig. 1). After being forwarded via resistor R₄, the voltage of the power supply provides a state indication voltage V_{SI} that corresponds to state of the computer, particularly to the state of its control unit 210 (referring to Fig. 1).

The first and second voltage dividers are dimensioned, such that during normal operation the state indication voltage V_{SI} at the inverting input is higher than the a voltage at the non-inverting input that serves as a threshold voltage V_{Th}. According to the operational characteristic of comparator OP, which provides at its output an output voltage Vₒᵤₜ, the above voltage setting results in a low output voltage Vₒᵤₜ and therefore in a low voltage over sound transducer ST. Consequently the sound transducer ST is silent in this normal operation state.

When the system enters the power-off state, the power supply becomes switched-off. In this situation capacitor C provides an intermediate power supply for comparator OP and, under control of comparator OP, for sound transducer ST. The resistors R₂ and R₃ of the first voltage divider and resistors R₄ and R₅ of second voltage divider are dimensioned to fulfill a second condition, namely to being the state indication voltage V_{SI} at the inverting input to a lower level than at the threshold voltage V_{Th} at the non-inverting input. Within the limit of the voltage of the power supply, this voltage setting results in a high output voltage Vₒᵤₜ and therefore in a high voltage over sound transducer ST, which is activated as long as capacitor C provides a sufficient power supply.

Practical embodiments have shown good results with the following dimensioning:

| | | | | | |
|---|---|---|---|---|---|
| R₁: | 100 | Ohm - 1 kOhm | R₂: | 68 | kOhm |
| R₃ : | 120 | kOhm | R₄ : | 47 | kOhm |
| R₅: | 150 | kOhm | R₆: | 100 | Ohm - 400 Ohm |
| C: | 2000 | µF | ST: | | Sound transducer |
| D: | | 1N4148 | OP: | | LM393N |

The sound transducer can be a common transducer, for example the miniature type SV3 from VELLEMAN, Gavere, Belgium. LM393 is a commonly known comparator, for example from NATIONAL SEMICONDUCTOR CORP., Santa Clara, USA.

Resistors R₁ and R₃ may be adjusted to provide a slow charging time for capacitor C of 3 to 10 seconds and no activation of the sound transducer occurs during the working session, namely during the exchanging of data.

Fig. 8 shows a simplified signal diagram for the electronic circuit according to Fig. 7 with time t as an x-axis and voltage V as y-axis.

Before time t₀, the system is in the normal operation state, namely exchanging data or being ready for exchanging data. During this time, state indication voltage V_{SI} (indicated by a dashed line), threshold voltage V_{Th} (indicated by a dash-dotted line) and output voltage Vout (indicated by a full-drawn line) are at a substantially constant level.

At time t₀, as described above the power supply is switched-off and state indication voltage V_{SI} rapidly drops, whereas threshold voltage V_{Th} drops a much lower speed, because threshold voltage V_{Th} is provided by capacitor C (referring to Fig. 7) via the first voltage divider. At time t₁ the state indication voltage V_{SI} drops below to the threshold voltage V_{Th}, which causes a switch at the output of comparator OP from a low to a higher voltage, such that Vₒᵤₜ rapidly increases and the sound transducer generates a sound.

Until time t₂ the supply voltage from capacitor C drops till it reaches a certain minimum voltage Vₘᵢₙ, which is the minimal voltage that is necessary to drive the sound transducer. Therefore, after the time t₂ the voltage further drops, but no sound is emitted. Therefore the total alerting time t_{A} for the user is t₂-t₁. In particular, capacitor C is designed, such that the total alerting time t_{A} is between one tenth of a second and ten seconds, and may advantageously be between one second and three seconds.

Other alternative embodiments of the devices according to the invention are conceivable. Explicitly mentioned in this context are memory disk drives with a SATA-interfaces or SAS-interface and computer systems and connecting system, which identify the type of the attached devices and which provide the alerting function only in the case that a portable memory device has been identified.

## Claims

1. Method for a portable memory device (100), in particular a memory stick,
which in a first step is connected to a computer system (200) via a data interface (140, 240; 340), through which data (S_{D}) can be exchanged between the portable memory device (100) and the computer system (200),
the method comprising the further steps of:
a) with a detection module (30), detecting a system state change that is indicative of a termination of the exchange of data (S_{D}) and thereupon providing an alarm indication (S_{A}), such as a signal or message;
b) forwarding the alarm indication (S_{A}) from the detection module (30) to an alerting module (40); and
c) upon receiving the alarm indication (S_{A}) activating the alerting module (40) at least temporarily in order to send an alerting signal (Sₒᵤₜ) to the user of the portable memory device (100).

2. Method according to claim 1, wherein the system state change is detected by observing an entrance of the system into at least one of:
a) a completion state, in which the exchange of data (S_{D}) is completed;
b) a connection closed state, in which the exchange of connection control information is completed;
c) a power-off state, in which the power supply for the portable memory device (100) is switched-off.

3. Method according to claim 1 or 2, wherein the system state change is detected by observing at least one of:
a) a state change, in particular a switching-off, of a power supply for the portable memory device (100);
b) a state change of the portable memory device (100), in particular of a memory controller (110) thereof;
c) a state change of the computer system (200), in particular of a control unit (210) thereof;
d) a termination of a system program;
e) a termination of an application program.

4. Method according to any of the claims 1 to 3, wherein the system state change is detected by receiving and evaluating a state indication information (S_{SI}) such as a power supply information, a signal or a message, that corresponds to the system state.

5. Method according to claim 4, wherein the state indication information (S_{SI}) is received via the data interface (140, 240), a wire connection (20), a pluggable connector, a USB-interface or any combination thereof.

6. Method according to any of the claims 1 to 5, wherein the system state change is detected by comparing the received state indication information (S_{SI}) to a reference, in particular by comparing the voltage (V_{SI}) of the received state indication information to a threshold voltage (V_{Th}).

7. Method according to any of the claims 1 to 6, wherein the output signal (Sₒᵤₜ) is emitted as acoustical signal, in particular by generating sounds, tunes or beeps.

8. Method according to any of the claims 1 to 7, wherein the further steps comprise, at least temporarily, the providing of an autonomous power supply for the alerting module (40), and if applicable, for the detection module (30).

9. Method according to claim 8, wherein the autonomous power supply is provided by supplying the power at a level sufficient to alert the user at least during a predetermined period of time (t_{A}), in particular a period of time with a length between one tenth of a second and ten seconds.

10. Method according to any of the claims 1 to 9, wherein the system, in particular the portable memory device (100) the data interface (240; 340) or the computer system (200), is monitored for detecting a removal of the portable memory device (100) from the computer system (200), and the step of activating the alerting module (40) is performed only if no removal of the portable memory device (100) from the computer system (200) has been detected.

11. Method according to claim 10, wherein the system is monitored during a predetermined time period, in particular during a time between one second and ten seconds after the detection of the system state change, and the step of activating the alerting module (40) is delayed until this predetermined time period has expired.

12. Method according to claim 10 or 11, wherein the system is monitored by means of a capacitance sensor or a resistance sensor or a voltage sensor or by means of an acceleration sensor that is provided in the portable memory device (100).

13. Portable memory device (100), in particular a memory stick, comprising a data interface (140) that is connectable to a computer system (200) for exchanging data (S_{D}) between the portable memory device (100) and the computer system (200), wherein the portable memory device (100) comprises a detection module (30), which is configured to detect a system state change that is indicative of a termination of the exchange of data (S_{D}) and to provide thereupon an alarm indication (S_{A}), such as a signal or message, and wherein the portable memory device (100) further comprises an alerting module (40), which is connected to the detection module (30) for receiving the alarm indication (S_{A}), and which is configured to be activated at least temporarily upon receiving the alarm indication (S_{A}) in order to send an alerting signal (Sₒᵤₜ) to the user of the portable memory device (100).

14. Portable memory device (100) according to claim 13, wherein the portable memory device (100) comprises a power storage unit (50), in particular a capacitor or a rechargeable battery, which is connected to the alerting module (40) and, if applicable, to the detection module (30), to provide at least temporarily an autonomous power supply.

15. Connecting device (300) for a portable memory device (100), in particular a docking device, a hub or a repeater, that comprises a data interface (340) to which a computer system (200) and the portable memory device (100) are connectable for exchanging data (S_{D}) between the portable memory device (100) and the computer system (200), wherein the connecting device (300) comprises a detection module (30), which is configured to detect a system state change that is indicative of a termination of the exchange of data (S_{D}) and to provide thereupon an alarm indication (S_{A}) , such as a signal or message, and wherein the connecting device (300) further comprises an alerting module (40), which is connected to the detection module (30) for receiving the alarm indication (S_{A}) and which is configured to be activated at least temporarily upon receiving the alarm indication (S_{A}) in order to send an alerting signal (Sₒᵤₜ) to the user of the portable memory device (100).
